# EUROPEAN PATENT APPLICATION

(11) **EP 4 447 434 A1**
(43) Date of publication of application: **16.10.2024**
(21) Application number: 23167435.9
(22) Date of filing: 11.04.2023
(51) Int. Cl.: H04N 9/31, B60Q 1/24

(54) **VEHICLE LAMP**

(71) Applicant: Plastic Omnium Lighting Systems GmbH, 80807 München (DE)
(72) Inventor: KHRUSHCHEV, Sergey, 80807 MUNICH (DE)
(74) Representative: LLR

(57) **Abstract**

The invention concerns a vehicle lamp (3) for projecting a light image (5) on an imaging surface (7), having:
- at least two monochromatic light sources (R, G, B), each generating a light beam (LR, LG, LB),
- a light image generation device (9), the light image generation device (9) generating monochromatic light images (5R, 5G, 5B) via at least one pixel matrix generating element (11),
- a projection prism (13) configured to project said monochromatic light images (5R, 5G, 5B) on the imaging surface (7),
the vehicle lamp (3) comprising compensation means (15) configured to generate a corrected light image (5) by offsetting the monochromatic light image (5R, 5G, 5B) and transmitting the corrected monochromatic light image (5R, 5G, 5B) to the projection prism (13).

The invention also concerns a method for projecting a corrected light image (5) on an imaging surface (7) by such a vehicle lamp (3).

## Description

The invention relates to the domain of the automotive industry, and particularly to a vehicle lamp for projecting a light image on an imaging surface. Furthermore, the invention relates to a method for projecting a corrected light image on an imaging surface by such a vehicle lamp.

It is known, for example from the disclosure of the patent publication document DE 10 2021 107 851 A1, to provide a vehicle lamp for projecting a light image on an imaging surface, wherein the vehicle lamp has a micro lens array - known as MLA - allowing to project an image on an imaging surface. A light source is arranged upstream of the MLA and a projection optical device is arranged downstream of the MLA.

It is also known to provide a projection prism to modify, to increase, the dimensions of a light image to be projected on an imaging surface. However, the use of such a projection prism leads to chromatic aberrations. Such aberrations may be minimised by the use of numerous projection lenses of different materials, however leading to a wide increasing of the manufacturing costs.

The invention therefore aims to provide a vehicle lamp for projecting a light image on an imaging surface, all the while minimising chromatic aberrations, which is easy and cheap to manufacture.

To that end, the invention concerns a vehicle lamp for projecting a light image on an imaging surface, wherein the vehicle lamp has:
- at least two monochromatic light sources of distinct colours, each generating a monochromatic light beam,
- a light image generation device having at least one pixel matrix generating element, the light image generation device being arranged downstream of said monochromatic light beams and generating a monochromatic light image made of a pixel matrix for each monochromatic light source via the at least one pixel matrix generating element,
- a projection prism, arranged downstream of the light image generation device, and configured to project said monochromatic light images on the imaging surface,
the vehicle lamp comprising compensation means configured to generate, from calculated or predetermined distances between monochromatic light images projected by each monochromatic light source on the imaging surface, a corrected light image by offsetting the monochromatic light image of at least one of the monochromatic light sources arranged upstream of the pixel matrix generating element and transmitting the corrected monochromatic light image to the projection prism.

Owing to the fact that the vehicle lamp has compensation means, the aberrations of the projection prism are corrected without using numerous projections lenses, unlike what is proposed in the prior art where the projection lenses are numerous, making the vehicle lamp costly. Thus, the compensation means allow to minimise chromatic aberration of the light image by compensation of the distances between monochromatic light images projected by each monochromatic light source on the imaging surface. If so, it is for example possible to choose to manufacture the projection lenses out of the same material, unlike what is proposed in the prior art where the projection lenses are made from different materials, which leads to high manufacturing costs.

According to a preferred embodiment, the vehicle lamp comprises at least one projection lens arranged downstream of the light image generation device and upstream of the projection prism. Thus, the light image is of a good quality without heavily increasing the manufacturing costs.

According to a preferred embodiment, the vehicle lamp is arranged on board of a vehicle, on a rocker panel, a sill, an underbody or a side mirror.

According to a preferred embodiment, the light image extends laterally beside the vehicle in a longitudinal direction of the vehicle and extends in a transverse direction of the vehicle away from the vehicle and/or the light image extends from a rear of the vehicle in the longitudinal direction away from the vehicle and in the transverse direction of the vehicle.

According to a preferred embodiment, the imaging surface is planar.

According to a preferred embodiment, the imaging surface is a dashboard, preferably a tri-dimensional curved dashboard.

According to a preferred embodiment, the vehicle lamp has three monochromatic light sources. Thus, it is possible to project an image in a large spectrum of light, for example including white light.

According to a preferred embodiment, a first monochromatic light source is a blue light source, a second monochromatic light source is a yellow light source or a green light source, and preferably a third monochromatic light source is a red light source. Thus, it is possible to project an image in a large spectrum of light, e.g., a whole spectrum of light including white light.

According to a preferred embodiment, the vehicle lamp has four or less projection lenses arranged downstream of the light image generation device and upstream of the projection prism. Thus, the light image is of a good quality without heavily increasing the manufacturing costs.

According to a preferred embodiment, the projection lenses are made of the same material. Thus, the production costs are reduced and the manufacturing of the vehicle lamp is simplified. Indeed, thanks to the compensation of the chromatic aberrations by the compensation means, it is possible to use common inexpensive projection lenses for the vehicle lamp.

According to a preferred embodiment, the projection lenses are made of injection moulded plastic, preferably of the same injection moulded plastic. Thus, the production costs are reduced and the manufacturing of the vehicle lamp is simplified. Indeed, thanks to the compensation of the chromatic aberrations by the compensation means, it is possible to use common inexpensive projection lenses for the vehicle lamp.

According to a preferred embodiment, each monochromatic light source is made of a LED and two collimating lenses arranged downstream in the monochromatic light beam. Thus, the monochromatic light sources are simple and inexpensive.

According to a particular embodiment, each monochromatic light source is a laser source. Thus, the light emitted by the monochromatic light sources may be powerful.

According to a particular embodiment, the collimating lenses and the projection lenses are made of the same material. Thus, the production costs are reduced and the manufacturing of the vehicle lamp is simplified. Indeed, thanks to the compensation of the chromatic aberrations by the compensation means, it is possible to use common inexpensive lenses for the vehicle lamp.

According to a preferred embodiment, the collimating lenses and the projection lenses are made of injection moulded plastic, preferably of the same injection moulded plastic. Thus, the production costs are reduced and the manufacturing of the vehicle lamp is simplified. Indeed, thanks to the compensation of the chromatic aberrations by the compensation means, it is possible to use common inexpensive projection lenses for the vehicle lamp.

According to a preferred embodiment, the at least one pixel matrix generating element is transmissive or reflective.

According to a preferred embodiment, each of the at least one pixel matrix generating element is a digital micromirrors matrix element. Thus, the at least one pixel matrix element is simple and inexpensive.

According to a preferred embodiment, the projection prism is a wedge prism. The use of a wedge prism as a projection prism helps to tilt and to increase the light beam, and therefore allow to increase the dimensions of the light image projected on the imaging surface.

According to a preferred embodiment, the vehicle lamp comprises at least one dichroic mirror, preferably arranged downstream of a monochromatic light source in the monochromatic light beam. Thus, the separation in and/or combination of monochromatic light beams is easily obtained.

According to a preferred embodiment, the vehicle lamp comprises a projector unit integrating said at least two monochromatic light sources of distinct colours, the light image generation device and the compensation means.

According to a preferred embodiment, the light image generation device comprises only one pixel matrix generating element, wherein the light of each monochromatic light source is emitted successively towards the pixel matrix generating element, the pixel matrix generating element being arranged in the monochromatic light beams downstream of the monochromatic light sources and emitting a pixel matrix for each monochromatic light source, and the vehicle lamp comprises at least a dichroic mirror being arranged downstream of the monochromatic light sources and upstream of the pixel matrix generating element.

According to a particular embodiment, the vehicle lamp comprises a micro lens array, the micro lens array being arranged downstream of the monochromatic light sources and upstream of the light image generation device. Thus, the micro lens array, also known as MLA, improves a light homogenization.

According to a particular embodiment, the light image generation device comprises a pixel matrix generating element for each monochromatic light source, wherein the light of each monochromatic light source is emitted towards the respective pixel matrix generating element, the pixel matrix generating element being arranged in a light beam downstream of the respective monochromatic light source and emitting a pixel matrix from the respective monochromatic light source.

According to an embodiment, the vehicle lamp comprises a white light source and at least one dichroic mirror arranged upstream of the monochromatic light sources in the light beam from the white light source, each monochromatic light source resulting from the separation of the light beam from the white light source by the at least one dichroic mirror. Thus, the monochromatic light sources are easily obtained from a single light source.

The invention also concerns a method for projecting a corrected light image on an imaging surface by a vehicle lamp according to the invention as previously described, comprising the following consecutive steps:
- generating a light image signal to be corrected and projected by the projection prism of the vehicle lamp on an imaging surface,
- from the light image signal, calculating a distance between the monochromatic light images to be projected by each of the monochromatic light sources on the imaging surface,
- determining an offset of the pixel matrix from the calculated distance,
- correcting at least one monochromatic light image of the light image signal by generating the offset of the pixel matrix to the at least one pixel matrix generating element,
- projecting the at least one corrected monochromatic light image on the imaging surface.

Thus, the aberrations of the projection prism are corrected without using numerous projections lenses, unlike what is proposed in the prior art where the projection lenses are numerous and thus, costly. Thus, chromatic aberrations of the light image are minimised by compensation of the distances between monochromatic light images projected by each monochromatic light source on the imaging surface.

### Brief description of the Figures

The invention will be better understood upon reading the following description, which is given only as an example and is made with reference to the attached drawings in which:
- Figure 1 is a schematic perspective view of an automotive vehicle comprising a vehicle lamp according to the invention;
- Figure 2 is a schematic view of the vehicle lamp according to a first embodiment of the invention;
- Figure 3 is a schematic view of a light image of a single pixel projected by the vehicle lamp on an imaging surface without correction;
- Figure 4 is a view of a correction by the offsetting of monochromatic light images;
- Figure 5 is a schematic view of a corrected light image projected by the vehicle lamp according to the invention;
- Figure 6 is a schematic view of the vehicle lamp according to a second embodiment of the invention;
- Figure 7 is a schematic view of the vehicle lamp according to a third embodiment of the invention.

### Detailed Description

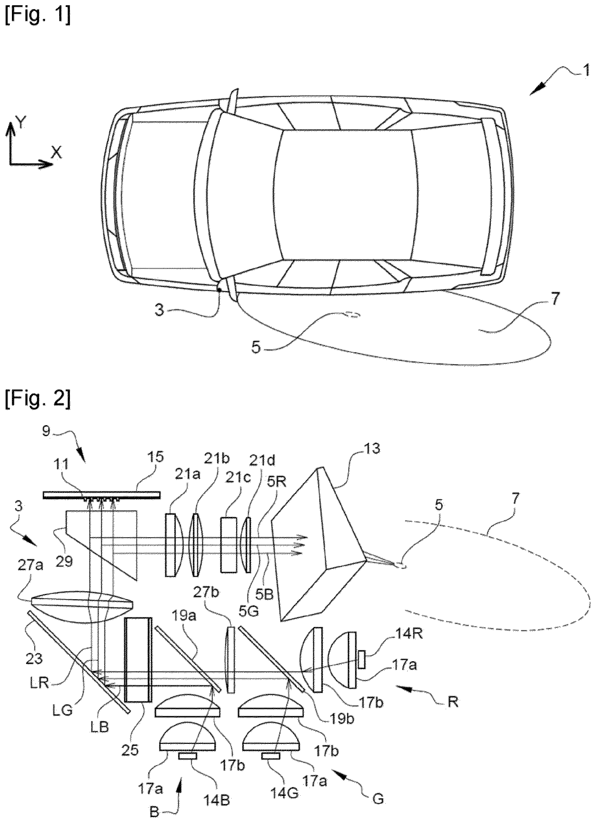

A vehicle 1 is depicted on Figure 1, and is for example an automotive vehicle. The vehicle 1 comprises a vehicle lamp 3. Thus, the vehicle lamp 3 is arranged on board of the vehicle 1, for example on a rocker panel, a door sill, an underbody or a side mirror. In the present embodiment, the vehicle lamp 3 is arranged on the rocker panel of the vehicle 1.

The vehicle lamp 3 projects a light image 5 on an imaging surface 7. For the sake of simplicity, in this example, the light image 5 is formed by the projection of only one light pixel on the imaging surface 7. However, the light image may be formed by the projection of a plurality of light pixels from a pixel matrix on the imaging surface 7. For example, the imaging surface 7 is planar.

The light image 5 extends laterally beside the vehicle 1 in a longitudinal direction X of the vehicle 1 and extends in a transverse direction Y of the vehicle 1 away from the vehicle 1. Additionally, or alternatively, the light image may extend from the rear of the vehicle 1 away from the vehicle in both the longitudinal and transverse directions of the vehicle, or the imaging surface is dashboard, preferably a tri-dimensional curved dashboard, such that the light image may extend inside the vehicle.

A vehicle lamp 3 according to a first embodiment is depicted on Figure 2. The vehicle lamp 3 comprises at least two monochromatic light sources R, G, B of distinct colours, each generating a monochromatic light beam LR, LG, LB. For example, the vehicle lamp 3 has three monochromatic light sources R, G, B, wherein a first monochromatic light source is a blue light source B, a second monochromatic light source is a yellow light source or a green light source G, and a third monochromatic light source is a red light source R. In particular, the second monochromatic light source is a green light source G. Each monochromatic light source R, G, B has preferably one wavelength or a wavelength comprised in a narrow spectral region, for example a 100 nm value range. For example, the red light source R has a wavelength comprised between 600 nm and 700 nm, the green light source has a wavelength comprised between 500 nm and 600 nm, and the blue light source B has a wavelength comprised between 400 nm and 500 nm.

The vehicle lamp 3 also comprises a light image generation device 9 having at least one pixel matrix generating element 11. The light image generation device 9 is arranged downstream of said monochromatic light beams LR, LG, LB and generating a monochromatic light image 5R, 5G, 5B made of a pixel matrix for each monochromatic light source R, G, B via the at least one pixel matrix generating element 11. For example, the at least one pixel matrix generating element 11 is transmissive or reflective. Moreover, for example, each of the at least one pixel matrix generating element 11 is a digital micromirrors matrix element. In the embodiment shown on Figure 2, the vehicle lamp 3 comprises only one pixel matrix generating element 11, which is a digital micromirrors matrix element.

Furthermore, the vehicle lamp 3 comprises a projection prism 13. The projection prism 13 is arranged downstream of the light image generation device 9, and configured to project said monochromatic light images 5R, 5G, 5B on the imaging surface 7. For example, the projection prism 13 is a wedge prism.

According to the invention, the vehicle lamp comprises compensation means 15. The compensation means 15 are configured to generate, from calculated or predetermined distances between monochromatic light images 5R, 5G, 5B projected by each monochromatic light source R, G, B on the imaging surface 7, a corrected light image 5 by offsetting the monochromatic light image 5R, 5G, 5B of at least one of the monochromatic light sources R, G, B arranged upstream of the pixel matrix generating element 11 and transmitting the corrected monochromatic light image 5R, 5G, 5B to the projection prism 13.

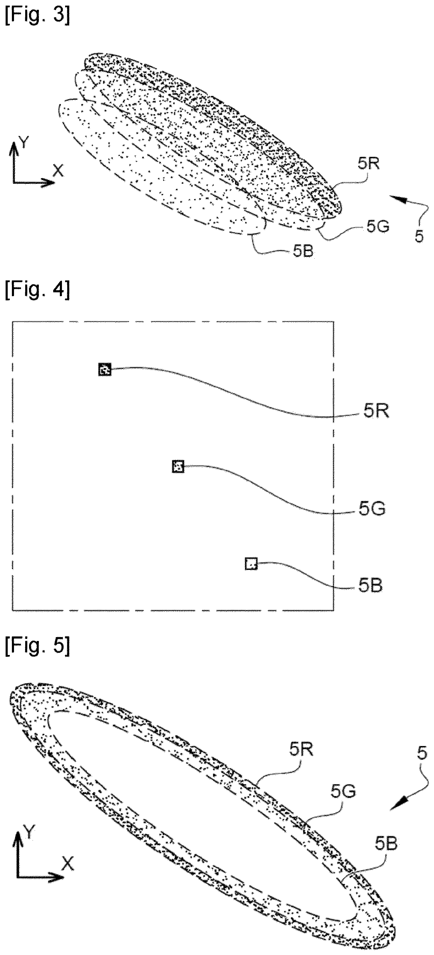

Figure 3 depicts a single pixel light image 5 without correction by the compensation means 15. It is easily visible that the monochromatic light images 5R, 5G, 5B are offset due to the refraction of the projection prism 13.

Figure 4 depicts the offset of the monochromatic light images 5R, 5G, 5B performed by the compensation means 15. Thus, the compensation means 15 acts on the pixel matrix generating element 11 or are integrated in the pixel matrix generating element 11, to offset the monochromatic light image 5R, 5G, 5B by a number of pixels, to offset the monochromatic light image 5R, 5G, 5B in the longitudinal direction X and in the transverse direction Y. In the depicted example, the monochromatic light image 5R is offset by -12 pixels in the longitudinal direction X and by +9 pixels in the transverse direction Y, the monochromatic light image 5G is not offset, in other words the monochromatic light image 5G being taken as reference, i.e., is offset by 0 pixel in the longitudinal direction X and by 0 pixels in the transverse direction Y, and the monochromatic light image 5B is offset by +12 pixels in the longitudinal direction X and by -9 pixels in the transverse direction Y.

Figure 5 depicts a corrected light image 5 including correction by the compensation means 15. It is easily visible that the monochromatic light images 5R, 5G, 5B are much less offset on the imaging surface 7 due to the refraction of projection lenses 21a-d and projection prism 13 in comparison with a light image 5 without correction, as shown on Figure 3.

In the embodiment shown on Figure 2, each monochromatic light source R, G, B is respectively composed of a LED 14R, 14G, 14B associated with two collimating lenses 17a, 17b arranged downstream in the monochromatic light beam LR, LG, LB. In a non-illustrated variant, each monochromatic light source R, G, B is a laser source. In this embodiment, the vehicle lamp 3 is configured such that the light image generation device 9 comprises only one pixel matrix generating element 11. The light from each monochromatic light source R, G, B is emitted successively towards the pixel matrix generating element 11. The pixel matrix generating element 11 is arranged in the monochromatic light beams LR, LG, LB downstream of the monochromatic light sources R, G, B and emits a pixel matrix for each monochromatic light source R, G, B.

The vehicle lamp 3 comprises at least one dichroic mirror 19a, 19b that is arranged downstream of a monochromatic light source R, G, B. For example, the vehicle lamp 3 comprises at least one dichroic mirror 19a, 19b that is arranged downstream of the monochromatic light sources R, G, B and upstream of the pixel matrix generating element 11. More precisely, in the embodiment shown on Figure 2, the vehicle lamp 3 comprises two dichroic mirrors 19a, 19b.

The vehicle 3 also comprises at least one projection lens, but four or less projection lenses, arranged downstream of the light image generation device 9 and upstream of the projection prism 13. More precisely, in the embodiment shown on Figure 2, the vehicle lamp 3 comprises four projection lenses 21a-21d.

In the embodiment shown on Figure 2, a blue light beam LB emitted by the LED 14B of the first monochromatic light source B is collimated by two collimating lenses 17a, 17b. It is then reflected by a dichroic mirror 19a onto a full mirror 23, optionally by passing through a micro lens array 25. In other words, the micro lens array 25 is optional in the vehicle lamp 3 and may be not present in the vehicle lamp 3. Thus, the micro lens array 25 is arranged downstream of the monochromatic light sources R, G, B and upstream of the light image generation device 9. Then, the blue light beam LB passes through a relay lens 27a and through a RTIR prism 29 - also known as a reverse total internal reflection prism. The blue light beam LB is then reflected by the pixel matrix generating element 11 to generate a blue light image 5B. The blue light image 5B is then reflected by the RTIR prism, passes through the four projection lenses 21a-21d and through the projection prism 13 to be projected on the imaging surface 7.

Before or after the generation of the blue light image 5B, a green light beam LG emitted by the LED 14G of the second monochromatic light source G is collimated by two collimating lenses 17a, 17b. It is then reflected by a dichroic mirror 19b, passes through a relay lens 27b, the dichroic mirror 19a and optionally the micro lens array 25. Then, the green light beam LB is reflected by the full mirror 23 and passes through the relay lens 27 and through the RTIR prism 29. The green light beam LG is then reflected by the pixel matrix generating element 11 to generate a green light image 5G. The green light image 5G is then reflected by the RTIR prism, passes through the four projection lenses 21a-21d and through the projection prism 13 to be projected on the imaging surface 7.

Before or after the generation of the blue light image 5B and before or after the generation of the green light image 5G, a red light beam LR emitted by the LED 14R of the third monochromatic light source R is collimated by two collimating lenses 17a, 17b. It passes then through a dichroic mirror 19b, the relay lens 27b, the dichroic mirror 19a and optionally the micro lens array 25. Then, the red light beam LR is reflected by the full mirror 23 and passes through the relay lens 27 and through the RTIR prism 29. The red light beam LR is then reflected by the pixel matrix generating element 11 to generate a red light image 5R. The red light image 5R is then reflected by the RTIR prism 29, passes through the four projection lenses 21a-21d and through the projection prism 13 to be projected on the imaging surface 7.

The compensation means 15 set the pixel matrix generating element 11 such that the red light beam LR reflected by the pixel matrix generating element 11 generates a corrected red light image 5R. Thus, the compensation means 15 allows to offset the red light image 5R by a number of pixels, to offset the red light image 5R in the longitudinal direction X and in the transverse direction Y, for example compared to the green light image 5G. Similarly, the compensation means 15 set the pixel matrix generating element 11 such that the blue light beam LB reflected by the pixel matrix generating element 11 generates a corrected blue light image 5B. Thus, the compensation means 15 allows to offset the blue light image 5B by a number of pixels, to offset the blue light image 5B in the longitudinal direction X and in the transverse direction Y, for example compared to the green light image 5G. Consequently, the corrected red light image 5R, the green light image 5G - which is not corrected in this case- and the corrected blue light image 5B allow to display a corrected image 5 with less chromatic aberrations due to the projection prism 13, as depicted on Figure 5, compared to an image 5 wherein the red light image 5R, the green light image 5G and the blue light image 5B are not corrected, as depicted on Figure 3.

For example, the compensation means 15 includes a memory which stores data relative to offset, the data being specific to the vehicle 1, such that distances between monochromatic light images 5R, 5G, 5B projected by each monochromatic light source R, G, B on the imaging surface 7 may be calculated by a processor or are directly stored, i.e., are predetermined.

In the embodiment shown on Figure 2, the projection lenses 21a-21d are made of the same material. Preferably, the projection lenses 21a-21d and the collimating lenses 17a, 17b are made of the same material. More preferably, the projection lenses 21a-21d, the collimating lenses 17a, 17b and the relay lenses 27a, 27b are made of the same material. Preferably, the chosen material is injection moulded plastic.

According to a non-illustrated variant, the vehicle lamp 3 may comprise a projector housing integrating the at least two monochromatic light sources R, G, B of distinct colours, the light image generation device 9 and the compensation means 15.

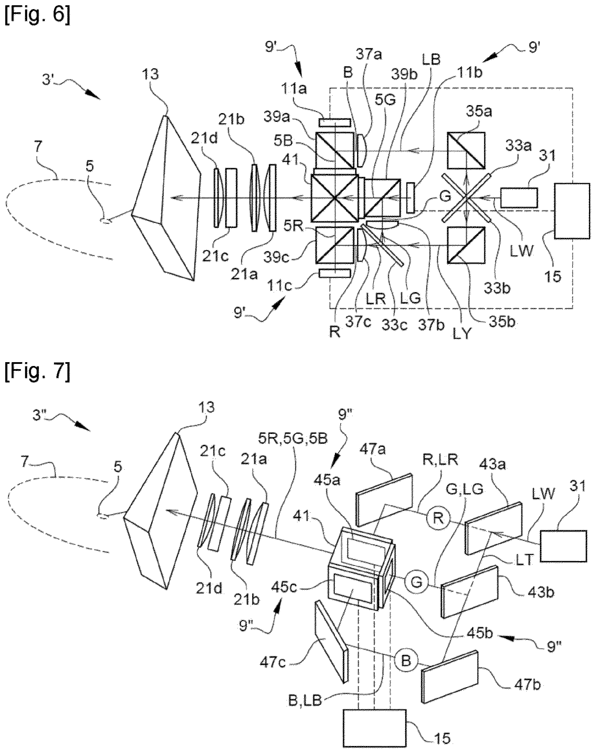

According to a second embodiment shown on Figure 6, the vehicle lamp 3' comprises a white light source 31 and at least one dichroic mirror 33a, 33b, 33c arranged upstream of the monochromatic light sources R, G, B in the light beam from the white light source 31. Thus, each monochromatic light source R, G, B results from the separation of the light beam from the white light source 31 by the at least one dichroic mirror 33a, 33b, 33c.

According to the second embodiment, the light image generation device 9' comprises a pixel matrix generating element 11a, 11b, 11c for each monochromatic light source R, G, B, wherein the light of each monochromatic light source R, G, B is emitted towards the respective pixel matrix generating element 11a, 11b, 11c, the pixel matrix generating element 11a, 11b, 11c being arranged in a light beam downstream of the respective monochromatic light source R, G, B and emitting a pixel matrix from the respective monochromatic light source R, G, B.

According to the second embodiment, the light image generation device 9' has three pixel matrix generating elements 11a, 11b, 11c, that are transmissive or reflective. For example, each of the pixel matrix generating elements 11'a, 11'b, 11'c is a digital micromirrors matrix element.

In the embodiment shown on Figure 6, a white light beam LW emitted by the white light source 31 is separated by an assembly of crossed dichroic mirrors 33a and 33b in a blue light beam LB and in a yellow light beam LY. The blue light beam LB is then reflected by a first full mirror 35a and is collimated by a first collimating lens 37a. Then, the blue light beam LB is reflected by a first TIR prism 39a to a first pixel matrix generating element 11a. The blue light beam LB is then reflected by the first pixel matrix generating element 11a to generate a blue light image 5B. The blue light image 5B then passes through the first TIR prism 39a, is reflected by a dichroic X-cube 41, passes through the four projection lenses 21a-21d and through the projection prism 13 to be projected on the imaging surface 7.

Simultaneously to the generation of the blue light image 5B, the yellow light beam LY is reflected on a second full mirror 35b and is separated by a third dichroic mirror 33c in a green light beam LG and in a red light beam LR. The green light beam LG is then collimated by a second collimating lens 37b. Then, the green light beam LG is reflected by a second TIR prism 39b to a second pixel matrix generating element 11b. The green light beam LG is then reflected by the second pixel matrix generating element 11b to generate a green light image 5G. The green light image 5G then passes through the second TIR prism 39b, is reflected by the dichroic X-cube 41, passes through the four projection lenses 21a-21d and through the projection prism 13 to be projected on the imaging surface 7, simultaneously with the blue light image 5B.

Simultaneously to the generation of the blue light image 5B and of the green light image 5G, the red light beam LR, resulting from the separation of the yellow light beam LY by the third dichroic mirror 33c in the green light beam LG and in the red light beam LR, is collimated by a third collimating lens 37c. Then, the red light beam LR is reflected by a third TIR prism 39c to a third pixel matrix generating element 11c. The red light beam LR is then reflected by the third pixel matrix generating element 11c to generate a red light image 5R. The red light image 5R then passes through the third TIR prism 39c, is reflected by the dichroic X-cube 41, passes through the four projection lenses 21a-21d and through the projection prism 13 to be projected on the imaging surface 7, simultaneously with the blue light image 5B and the green light image 5G to form the image 5.

The compensation means 15 set the third pixel matrix generating element 11c such that the red light beam LR reflected by the third pixel matrix generating element 11c generates a corrected red light image 5R. Thus, the compensation means 15 allows to offset the red light image 5R by a number of pixels, to offset the red light image 5R in the longitudinal direction X and in the transverse direction Y, for example compared to the green light image 5G. Similarly, the compensation means 15 set the first pixel matrix generating element 11a such that the blue light beam LB reflected by the first pixel matrix generating element 11a generates a corrected blue light image 5B. Thus, the compensation means 15 allows to offset the blue light image 5B by a number of pixels, to offset the blue light image 5B in the longitudinal direction X and in the transverse direction Y, for example compared to the green light image 5G. Consequently, the corrected red light image 5R, the green light image 5G - which is not corrected in this case- and the corrected blue light image 5B allow to display a corrected image 5 with less chromatic aberrations due to the projection prism 13, as depicted on Figure 5, compared to an image 5 wherein the red light image 5R, the green light image 5G and the blue light image 5B are not corrected, as depicted on Figure 3.

In the embodiment shown on Figure 6, the projection lenses 21a-21d are made of a same material. Preferably, the chosen material is injection moulded plastic.

According to a non-illustrated variant, the vehicle lamp 3' may comprise a projector housing integrating the at least two monochromatic light sources R, G, B of distinct colours, the light image generation device 9' and the compensation means 15. Preferably, the projector housing also integrates the white light source 31.

According to a third embodiment shown on Figure 7, the vehicle lamp 3" comprises a white light source 31 and at least one dichroic mirror 43a, 43b arranged upstream of the monochromatic light sources R, G, B in the light beam from the white light source 31. Thus, each monochromatic light source R, G, B results from the separation of the light beam from the white light source 31 by the at least one dichroic mirror 43a, 43b.

According to the third embodiment, the light image generation device 9" comprises a pixel matrix generating element 11a, 11b, 11c for each monochromatic light source R, G, B. The light of each monochromatic light source R, G, B is emitted towards the respective pixel matrix generating element 11a, 11b, 11c, the pixel matrix generating element 11a, 11b, 11c being arranged in a light beam downstream of the respective monochromatic light source R, G, B and emitting a pixel matrix from the respective monochromatic light source R, G, B.

According to the third embodiment, the light image generation device 9" has three pixel matrix generating elements 45a, 45b, 45c, that are transmissive or reflective. For example, each of the pixel matrix generating elements 45a, 45b, 45c is transmissive and is a LCD element.

In the embodiment shown on Figure 7, a white light beam LW emitted by the white light source 31 is separated by a first dichroic mirror 43a in a red light beam LR and in a turquoise light beam LT. The red light beam LR is then reflected by a first full mirror 47a through a first pixel matrix generating element 45a to generate a red light image 5R. The red light image 5R is then reflected by a dichroic X-cube 41, passes through the four projection lenses 21a-21d and through the projection prism 13 to be projected on the imaging surface 7.

Simultaneously to the generation of the red light image 5R, the turquoise light beam LT is separated by a second dichroic mirror 43b in a green light beam LG and in a blue light beam LB. The green light beam LG passes through a second pixel matrix generating element 45b to generate a green light image 5G. The green light image 5G is then reflected by the dichroic X-cube 41, passes through the four projection lenses 21a-21d and through the projection prism 13 to be projected on the imaging surface 7, simultaneously with the red light image 5R.

Simultaneously to the generation of the red light image 5R and of the green light image 5G, the blue light beam LR, resulting from the separation of the turquoise light beam LT by the second dichroic mirror 43b in the green light beam LG and in the blue light beam LB, is then reflected by a second full mirror 47b and a third full mirror 47c through a third pixel matrix generating element 45c to generate a blue light image 5B. The blue light image 5B is then reflected by the dichroic X-cube 41, passes through the four projection lenses 21a-21d and through the projection prism 13 to be projected on the imaging surface 7, simultaneously with the red light image 5R and the green light image 5G to form the image 5.

The compensation means 15 set the first pixel matrix generating element 45a such that the red light beam LR reflected by the first pixel matrix generating element 45a generates a corrected red light image 5R. Thus, the compensation means 15 allows to offset the red light image 5R by a number of pixels, to offset the red light image 5R in the longitudinal direction X and in the transverse direction Y, for example compared to the green light image 5G. Similarly, the compensation means 15 set the third pixel matrix generating element 45c such that the blue light beam LB reflected by the third pixel matrix generating element 45c generates a corrected blue light image 5B. Thus, the compensation means 15 allows to offset the blue light image 5B by a number of pixels, to offset the blue light image 5B in the longitudinal direction X and in the transverse direction Y, for example compared to the green light image 5G. Consequently, the corrected red light image 5R, the green light image 5G - which are not corrected in this case- and the corrected blue light image 5B allow to display a corrected image 5 with less chromatic aberrations due to the projection prism 13, as depicted on Figure 5, compared to an image 5 wherein the red light image 5R, the green light image 5G and the blue light image 5B are not corrected, as depicted on Figure 3.

In the embodiment shown on Figure 7, the projection lenses 21a-21d are made of the same material. Preferably, the chosen material is injection moulded plastic.

According to a non-illustrated variant, the vehicle lamp 3" may comprise a projector housing integrating the at least two monochromatic light sources R, G, B of distinct colours, the light image generation device 9" and the compensation means 15. Preferably, the projector housing also integrates the white light source 31.

Any combination of the above embodiments or variants can also be envisioned.

A method for projecting a corrected light image 5 on an imaging surface 7 by a vehicle lamp 3, 3', 3" as previously described shall now be described. Such a method comprises the following consecutive steps:
- generating a light image signal to be corrected and projected by the projection prism 13 of the vehicle lamp 3, 3', 3" on an imaging surface 7,
- from the light image signal, calculating a distance between the monochromatic light images 5R, 5G, 5B to be projected by each of the monochromatic light sources R, G, B on the imaging surface 7,
- determining an offset of the pixel matrix from the calculated distance,
- correcting at least one monochromatic light image 5R, 5G, 5B of the light image signal by generating the offset of the pixel matrix to the at least one pixel matrix generating element 11, 11a-11c, 45a-45c,
- projecting the at least one corrected monochromatic light image 5R, 5G, 5B on the imaging surface 7.

It should be noted that at least the aforementioned steps of:
- from the light image signal, calculating a distance between the monochromatic light images 5R, 5G, 5B to be projected by each of the monochromatic light sources R, G, B on the imaging surface 7,
- determining an offset of the pixel matrix from the calculated distance,
- correcting at least one monochromatic light image 5R, 5G, 5B of the light image signal by generating the offset of the pixel matrix to the at least one pixel matrix generating element 11, 11a-11c, 45a-45c,
may be performed by the compensation means 15.

The invention is not limited to the presented embodiments and other embodiments will clearly appear to the skilled person. Any combination of the aforementioned embodiments or variants is for example explicitly envisioned.

### References list:

1: vehicle
3: vehicle lamp
5: light image
7: imaging surface
9, 9', 9": light image generation device
11, 11a, 11b, 11 c: pixel matrix generating element
13: projection prism
14R, 14G, 14B: LED
15: compensation means
17a, 17b: collimating lenses
19a, 19b: dichroic mirror
21a, 21b, 21c, 21d: projection lenses
23: full mirror
25: micro lens array
27a, 27b: relay lens
29: RTIR prism
31: white light source
33a, 33b, 33c: dichroic mirror
35a, 35b: full mirror
37a, 37b, 37c: collimating lens
39a, 39b, 39c: TIR prism
41: dichroic X-cube
43a, 43b, 43c: dichroic mirror
45a, 45b, 45c: pixel matrix generating element
47a, 47b, 47c: full mirror
R: red light source
G: green light source
B: blue light source
LR: red light beam
LG: green light beam
LB: blue light beam
LW: white light beam
LY: yellow light beam
LT: turquoise light beam
X: longitudinal direction
Y: transverse direction

## Claims

1. Vehicle lamp (3, 3', 3") for projecting a light image (5) on an imaging surface (7), wherein the vehicle lamp (3, 3', 3") has:
- at least two monochromatic light sources (R, G, B) of distinct colours, each generating a monochromatic light beam (LR, LG, LB),
- a light image generation device (9, 9', 9") having at least one pixel matrix generating element (11, 11a, 11b, 11c, 45a, 45b, 45c), the light image generation device (9, 9', 9") being arranged downstream of said monochromatic light beams (LR, LG, LB) and generating a monochromatic light image (5R, 5G, 5B) made of a pixel matrix for each monochromatic light source (R, G, B) via the at least one pixel matrix generating element (11, 11a, 11b, 11c, 45a, 45b, 45c),
- a projection prism (13), arranged downstream of the light image generation device (9, 9', 9"), and configured to project said monochromatic light images (5R, 5G, 5B) on the imaging surface (7),
**characterized in that**
the vehicle lamp (3, 3', 3") comprises compensation means (15) configured to generate, from calculated or predetermined distances between monochromatic light images (5R, 5G, 5B) projected by each monochromatic light source (R, G, B) on the imaging surface (7), a corrected light image (5) by offsetting the monochromatic light image (5R, 5G, 5B) of at least one of the monochromatic light sources (R, G, B) arranged upstream of the pixel matrix generating element (11, 11a, 11b, 11c, 45a, 45b, 45c) and transmitting the corrected monochromatic light image (5R, 5G, 5B) to the projection prism (13).

2. Vehicle lamp (3, 3', 3") according to claim 1, wherein the vehicle lamp (3, 3', 3") has three monochromatic light sources (R, G, B).

3. Vehicle lamp (3, 3', 3") according to any one of the preceding claims, wherein a first monochromatic light source is a blue light source (B), a second monochromatic light source is a yellow light source or a green light source (G), and preferably a third monochromatic light source is a red light source (R).

4. Vehicle lamp (3, 3', 3") according to any one of the preceding claims, having four or less projection lenses (21a-21d) arranged downstream of the light image generation device (9, 9', 9") and upstream of the projection prism (13).

5. Vehicle lamp (3, 3', 3") according to the preceding claim, wherein the projection lenses (21a-21d) are made of injection moulded plastic, preferably of the same injection moulded plastic.

6. Vehicle lamp (3) according to any one of the preceding claims, wherein each monochromatic light source (R, G, B) is made of a LED (14R, 14G, 14B) and two collimating lenses (17a, 17b) arranged downstream in the monochromatic light beam (LR, LG, LB).

7. Vehicle lamp (3) according to claims 5 and 6 taken in combination, wherein the collimating lenses (17a, 17b) and the projection lenses (21a-21d) are made of injection moulded plastic, preferably of the same injection moulded plastic.

8. Vehicle lamp (3, 3', 3") according to any one of the preceding claims, wherein the at least one pixel matrix generating element (11, 11a, 11b, 11c, 45a, 45b, 45c) is transmissive or reflective.

9. Vehicle lamp (3, 3') according to any one of the preceding claims, wherein each of the at least one pixel matrix generating element (11, 11a, 11b, 11c) is a digital micromirrors matrix element.

10. Vehicle lamp (3) according to any one of the preceding claims, comprising at least one dichroic mirror (19a, 19b), arranged downstream of a monochromatic light source (R, G, B) in the monochromatic light beam (LR, LG, LB).

11. Vehicle lamp (3, 3', 3") according to any one of the preceding claims, comprising a projector housing integrating the at least two monochromatic light sources (R, G, B) of distinct colours, the light image generation device (9, 9', 9") and the compensation means (15).

12. Vehicle lamp (3) according to any one of claims 1 to 8, wherein the light image generation device (9) comprises only one pixel matrix generating element (11), wherein the light of each monochromatic light source (R, G, B) is emitted successively towards the pixel matrix generating element (11), the pixel matrix generating element (11) being arranged in the monochromatic light beams (LR, LG, LB) downstream of the monochromatic light sources (R, G, B) and emitting a pixel matrix for each monochromatic light source (R, G, B), and wherein the vehicle lamp (3) comprises at least a dichroic mirror (15a, 15b) being arranged downstream of the monochromatic light sources (R, G, B) and upstream of the pixel matrix generating element (11).

13. Vehicle lamp (3', 3") according to any one of claims 1 to 8, wherein the light image generation device (9', 9") comprises a pixel matrix generating element (11a, 11b, 11c, 45a, 45b, 45c) for each monochromatic light source (R, G, B), wherein the light of each monochromatic light source (R, G, B) is emitted towards the respective pixel matrix generating element (11a, 11b, 11c, 45a, 45b, 45c), the pixel matrix generating element (11a, 11b, 11c, 45a, 45b, 45c) being arranged in a light beam downstream of the respective monochromatic light source (R, G, B) and emitting a pixel matrix from the respective monochromatic light source (R, G, B).

14. Method for projecting a corrected light image (5) on an imaging surface (7) by a vehicle lamp (3, 3', 3") according the any one of the preceding claims, comprising the following consecutive steps:
- generating a light image signal to be corrected and projected by the projection prism (13) of the vehicle lamp (3, 3', 3") on an imaging surface (7),
- from the light image signal, calculating a distance between the monochromatic light images (5R, 5G, 5B) to be projected by each of the monochromatic light sources (R, G, B) on the imaging surface (7),
- determining an offset of the pixel matrix from the calculated distance,
- correcting at least one monochromatic light image (5R, 5G, 5B) of the light image signal by generating the offset of the pixel matrix to the at least one pixel matrix generating element (11, 11a, 11b, 11c, 45a, 45b, 45c),
- projecting the at least one corrected monochromatic light image (5R, 5G, 5B) on the imaging surface (7).
